# NEUE EUROPÄISCHE PATENTSCHRIFT

(11) **EP 2 233 456 B2**
(45) Veröffentlichungstag und Bekanntmachung des Hinweises auf die Entscheidung über den Einspruch: **06.05.2015**
(45) Hinweis auf die Patenterteilung: 23.05.2012
(21) Anmeldenummer: 10152878.4
(22) Anmeldetag: 08.02.2010
(51) Int. Cl.: C04B 41/65

(54) **Verfahren zur Herstellung von photokatalytisch aktivierten Bauteilen aus einer mit einem mineralischen Bindemittel gebundenen Matrix**
Method for producing of photocatalytically activated components made of a matrix bound with a mineral binding agent
Procédé de fabrication d'un composant photo-catalytique composé d'une matrice reliée à un liant minéral

(30) Priorität: 24.03.2009 DE 102009014600
(43) Veröffentlichungstag der Anmeldung: 29.09.2010
(73) Patentinhaber: Dyckerhoff AG, 65203 Wiesbaden (DE)
(72) Erfinder: Droll, Klaus, Dr., 55126 Mainz (DE)
(74) Vertreter: Solf, Alexander

(56) Entgegenhaltungen:
- EP-B1- 0 633 064
- EP-B1- 0 786 283
- WO-A1-01/00541
- WO-A1-2007/128630
- DE-U1-202008 001 836
- JP-A- 2001 277 216
- JP-A- 2002 274 965
- JP-A- 2003 211 423
- US-A1- 2007 218 314
- DATABASE WPI Week 200222 Thomson Scientific, London, GB; AN 2002-167669 XP002588927 -& JP 2001 317199 A (TODA KENSETSU KK) 16. November 2001 (2001-11-16)
- M. HUNGER ET AL.: 'Photocatalysis applied to concrete products' ZKG INTERNATIONAL Bd. 61, Nr. 8, 2008, Seiten 77 - 85
- M. HUNGER ET AL.: 'Photocatalysis applied to concrete products' ZKG INTERNATIONAL Bd. 10, Nr. 61, 2008, Seiten 76 - 84
- M. HUNGER ET AL.: 'Photocatalysis applied to concrete products' ZKG INTERNATIONAL Bd. 62, Nr. 2, 2009, Seiten 63 - 70
- DRS. D. H. CHEN ET AL.: 'Photocatalytic Coating on Road Pavements/Structures for NOx Abatement' ANNUAL PROJECT REPORT 26 Januar 2007, Seiten 1 - 17

## Beschreibung

Bauteile auf Basis mineralisch gebundener, kristalliner Matrix, mit denen sich die Erfindung befasst, sind Baukörper, die so verwendet werden sollen, dass sie im eingebauten Zustand z. B. in einem Gebäude zumindest eine Licht empfangende Oberfläche bilden und hergestellt sind aus einer wässrigen Mischung aus mindestens einem mineralischem Bindemittel wie z. B. Zement, Baukalk und/oder Gips oder Anhydrit, und in der Regel Zuschlagstoffen wie z. B. Sanden, Kiesen und Splitten und/oder Zusatzstoffen wie z. B. Flugaschen, Steinmehlen und/oder Zusatzmitteln wie z. B. Fliessmitteln, Stabilisatoren, Hydrophobierungsmitteln. Diese Bauteile sind z.B. in Schalungen oder Formen hergestellte Betonfertigteile oder in Schalungen erzeugte Ortbetonbauteile. Gleichermaßen sind diese Bauteile z.B. Betonwaren, das sind meist Betonerzeugnisse wie Betonpflastersteine, Betonrohre, Gehweg- und Belagplatten, Bord- und Randsteine, Bahnsteigkanten oder dgl. Zudem sind diese Bauteile z.B. Betonwerksteine oder Estrichböden und Terrazzoböden oder Mörtel oder Putze auf Baukörperoberflächen. Die Herstellung und Zusammensetzung dieser Bauteile werden z.B. im Handbuch "Betonfertigteile - Betonwerkstein - Terrazzo", Verlag Bau + Technik GmbH, Düsseldorf, 1999, insbesondere in den Kapiteln 5, 6 und 7 beschrieben. Die Erfindung befasst sich aber auch mit Gips oder Anhydrit gebundenen Bauteilen, insbesondere mit Gips gebundenen Fertigprodukten wie Gipskartonplatten, Gipswänden, Anhydrit-Estrichen u. dgl.

Es ist bekannt, Oberflächen von erhärteten Bauteilen mit photokatalytisch wirkenden Nanopartikeln wie TiO2 zu beschichten, so dass eine Selbstreinigung der Oberfläche erzielt werden kann. Neben dieser selbstreinigenden Wirkung können mit einem Photokatalysatorfilm beschichtete Oberflächen aktiv zur reinigung der sie umgebenden Luft beitragen, indem z.B. toxische Gase wie NO und NOx photokatalytisch zu NO2 oxidiert werden, woraus in wässrigem Milieu ungiftige Nitrat-Ionen resultieren. Als Beschichtungen sind organische gebundene Filme, Putze oder Mörtel verwendet worden, die nachträglich nach der Erstellung eines Bauwerks oder nach dem Erhärten der Bauteile z. 8. mit wässrigen Suspensionen auf die Bauteile aufgebracht werden (z. B. WO 01/00541 A1, EP 784 034 A1, EP 614 682 A1, DE 10 2005 057 770 A1, US 2 007/0027015 A1, EP 1 020 564 A1, US 2 006/0147756 A1, DE 10 2005 057 747 A1). Dabei werden auch Premixe aus einem hydraulischen Bindemittel und photokatalytisch wirkenden Partikeln zur Herstellung wässriger Mischungen angewendet (EP 1564194 A2) und die wässrigen Mischungen auf die Oberflächen aufgespritzt oder aufgesprüht (EP 1020564 A1).

Alle diese verschiedenartigen Beschichtungen haben generell den Nachteil, dass die außer den photokatalytisch wirkenden Nanoteilchen anderen vorhandenen Nebenbestandteile die Effektivität der Photokatalyse beeinträchtigen und/oder mengenmäßig zu viele der teuren photokatalytischen Nanoteilchen in unwirksamem Zustand enthalten und/oder sich die Beschichtung vom Untergrund durch Witterungseinflüsse löst und/oder die Beschichtung durch Umwelteinflüsse zerstört wird.

Eine andere relativ teure Methode ist, die photokatalytisch wirkenden Nanoteilchen der Grundmischung der Bauteile zuzumischen. Dabei ist zwar eine sehr große Menge an Nanoteilchen erforderlich, die Einbindung der Nanoteilchen in die Matrix ist aber sehr viel fester als in Beschichtungen, weshalb deren Wirkung dauerhafter ist (z.B. EP 885 857 A1, IT 1 286 492 A1).

Aufgabe der Erfindung ist, insbesondere geformte Bauteile der oben beschriebenen Art auf einfache Weise mit geringen Mengen an photokatalytisch aktiven Teilchen auszurüsten und dabei dennoch eine sehr effektive, dauerhafte photokatalytische Wirkung zu erzielen.

Diese Aufgabe wird durch die Merkmale des Anspruchs 1 gelöst. Vorteilhafte Weiterbildungen der Erfindung werden in den von diesem Anspruch abhängigen Unteransprüchen angegeben.

Nach der Erfindung werden an sich bekannte photokatalytisch aktive Teilchen z. B. TiO₂-Teilchen mit Teilchengrößen im Nanobereich, z.B. zwischen 1 und 1000 nm, und/oder Mikrobereich, z.B. zwischen 1 und 50 µm im Gemisch mit einem Bindemittelpulver, auf eine im eingebauten Zustand Licht empfangende Oberfläche eines noch nicht erhärteten mineralisch abbindenden Bauteils, insbesondere eine Matrix aus Zement bildenden Bauteils, übertragen bzw. aufgebracht. Noch nicht erhärtet meint, dass das Bauteil sich noch im Frischzustand bzw. im sogenannten grünen oder jungen Zustand (im Folgenden auch Frischbauteil genannt) und noch nicht im Festzustand (im Folgenden auch Festbauteil genannt) befindet, d.h. die mineralischen Bindemittel haben noch nicht ihre vollständige kristalline Feststruktur entwickelt, wie das z.B. beim Festbeton oder bei erhärteten Gipsbauteilen der Fall ist.

Erfingdungsgemäß erfolgt eine Übertragung der photokatalytisch aktiven Teilchen kurz nach der Formgebung des Bauteils aus einer plastischen bzw. bildsamen Mischung, die z. B. Wasser/Bindemittelwerte zwischen 0,3 und 0,7 aufweist, vor der oder spätestens kurz nach dem Beginn der Erhärtungsreaktion des Bindemittels, z.B. nach einer Entschalung des Bauteils, das zwar standfest aber noch nicht verfestigt ist und sich z.B. in einer sogenannten Ruheperiode zwischen z.B. 0,5 bis 6 Stunden des Frischbauteils befindet (siehe hierzu z. B. Zement, Taschenbuch 2002, Seite 114 bis 123, Punkt 4.1.2, Seite 142 bis 146, Punkt 5.2, Seite 301 bis 303, Punkt 4.5). Demgemäß erfolgt die Übertragung der Teilchen insbesondere während des Ansteifens und/oder Erstarrens des Zementleims oder des Gipses oder des Baukalkes. Der Fachmann kann für jede Mischung ohne großen Aufwand den Reifegrad oder die Viskosität einer Mischung bestimmen, bei der eine adhäsive Aufnahme der Teilchen auf der Oberfläche möglich ist.

Vorteilhaft ist, wenn bei der Übertragung der Teilchen auf die Oberfläche eines Frischbauteils die bildsame Mischung zumindest im Oberflächenbereich vibriert oder gerüttelt oder gestampft wird und insbesondere dabei thixotrope Vorgänge initiiert werden und sich dabei geringe Wasseranteile an der mit den photokatalytisch aktiven Teilchen ausgerüsteten Oberfläche des Bauteils anreichern.

Es ist überraschend, dass die photokatalytisch aktiven Teilchen fest und dauerhaft ohne zusätzliche Haftvermittler oder Haftmittel an der Oberfläche eines Frischbauteils, z.B. eines Frischbetonbauteils, angeordnet bzw. eingebunden werden können und auch nach dem Erhärten des Bauteils fest in die Oberfläche des Bauteils integriert sind, denn die Teilchen reagieren chemisch nicht mit Bestandteilen der Bauteilmischung und es musste erwartet werden, dass die Teilchen lose an der Oberfläche liegen bleiben und leicht abfallen oder absanden. Offenbar werden die Teilchen zunächst durch Kapillarkräfte von Kapillaren an der Bauteiloberfläche festgehalten. Diese Kapillaren werden bekanntlich vom Wasser der Frischmischung erzeugt, wenn es bei der Erhärtung von der Oberfläche des Bauteils in das Innere des Bauteils wandert und dort bei der verfestigenden Bindemittel-Kristallbildung (z.B. Calziumsilikathydrat- oder Calziumaluminathydrat-Phasenbildung und/oder Gipsdihydratbildung) verbraucht wird. Anschließend werden die Teilchen in die Kristallnadel- bzw. Kristallplättchenstruktur der erhärteten Bindemittel des erhärteten Zements, dem sogenannten Zementstein, eingefangen und dort mechanisch festgehalten, wobei frei zugängliche Teilchen oder Flächenbereiche verbleiben.

Als photokatalytisch aktive Teilchen bzw. Partikel werden z.B. TiO2 und/oder ZnO und/oder andere Partikel, insbesondere mineralmodifizierte Partikel mit einem breiteren Absorptionspektrum z.B. wie in DE 10 2005 057 747 A1 oder WO 01/00541 A1 beschrieben, die durch UV-Strahlung und/oder sichtbares Licht photokatalytisch angeregt werden können, verwendet. Die photokatalytisch aktiven Teilchen werden z.B. in Form von trockenen Pulvern mit Teilchenkorngrößen z.B. von 5 nm bis 50 µm, insbesondere von 20 bis 100 nm als sogenannte Nanoteilchen und/oder als Mikroteilchen mit Korngrößen z. B. von 0,1 bis 50 µm, insbesondere von 0,1 bis 1 µm verwendet.

Die photokatalytisch aktiven Teilchen werden auf eine Oberfläche homogen verteilt angeordnet mit z.B. 0,1 bis 50, insbesondere mit 2 bis 10 Flächen-%, d.h., dass die Oberfläche mit entsprechenden Mengen der Teilchen belegt ist. Die Belegung kann homogen flächenverteilt oder inhomogen z.B. nach einem oder mehreren Mustern oder als Computerpunktverteilung völlig unregelmäßig flächenverteilt sein.

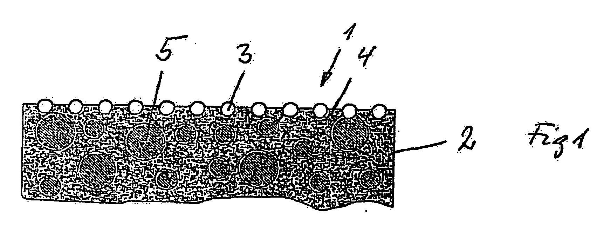

Fig. 1 zeigt schematisch eine Oberfläche 1 eines Bauteils 2 aus einem Zuschlagstoffe 5 aufweisenden Beton mit einer Bindemittelmatrix 4, bei dem nur auf bzw. an der Oberfläche 1 photokatalytisch aktive Teilchen 3 flächenverteilt angeordnet sind, die teilweise in die Bindemittelmatrix 4 eingebunden sind und an der Oberfläche des Bauteils 2 freie Teilchenoberfläche zeigen bzw. aufweisen.

Das Aufbringen der photokatalytisch aktiven Teilchen erfolgt unmittelbar oder mittelbar auf die Oberfläche des Frischbauteils. Unmittelbar erfolgt das Aufbringen z.B. durch Aufstäuben, Aufstreuen, Aufspritzen oder Aufdüsen, wenn sich das Frischbauteil noch in der Form oder Schalung befindet, auf die freie bzw. schalungsfreie Oberfläche oder nach der Entschalung auf eine dafür bestimmte Oberfläche.

Es kann zweckmäßig sein, nach dem Aufbringen der Teilchen die die Teilchen aufweisende Oberfläche vorsichtig zu glätten oder die Teilchen vorsichtig einzuwalzen oder einzutreiben.

Es liegt im Rahmen der Erfindung, zur mittelbaren Übertragung schalungsunabhängige bzw. formenunabhängige Vorrichtungen, z. B. Folien oder Walzen zu verwenden, auf denen vorher die Teilchen angeordnet worden sind und durch Auflegen und anschließendes Abziehen der Folien oder durch Auswalzen mit der Walze auf die Frischbauteiloberfläche übertragen werden.

Nach der Erfindung werden die photokatalytisch aktiven Teilchen mit einem Bindemittelpulver bzw. Bindemittelmehl z.B. aus Zement, Baukalk und/oderGips oder Anhydrit vor dem Aufbringen trocken gemischt. Die Bindemittelmehlteilchen reagieren dann nach dem Aufbringen der trockenen Bindemittel/aktive Teilchen-Mischung auf die Oberfläche mit dem vorhandenen Wasser an der Oberfläche des Frischbauteils und bilden Bindephasen,z. B. Gele, die die photokatalytisch aktiven Teilchen zunächst an die Oberfläche beim Anstreifen und Erstarren ankitten und beim anschließenden Erhärten dieses zusätzlichen Bindemittels die Teilchen in eine zusätzliche Kristallstruktur dieses Bindemittels einbinden. Zweckmäßigerweise weisen verwendbare Mischungen aus photokatalytisch aktiven Teilchen und Bindemittelpulver Gewichtsmengenverhältnisse von 90:10 bis 10:90, insbesondere von 80:20 bis 20:80 auf. Die Bindemittel können mit Korngrößenbereichen zwischen 10 nm und 100 µm eingesetzt werden. Vorzugsweise werden dabei Zemente mit Korngrößenbereichen zwischen 0,1 und 50 µm und/oder Feinstzemente mit Korngrößenbereichen zwischen 0,1 und 10 µm verwendet. Insbesondere wird ein Bindemittel verwendet, das auch für die Herstellung des Bauteils verwendet wird und z.B. ein Zement ist.

Eine weitere besondere Anwendung der Erfindung kann bei der Herstellung von Betonpflastersteinen oder Betonfertigteilen erfolgen, bei der zunächst der Kern- oder Hinterbeton in erdfeuchter Konsistenz in die Formen eingefüllt und durch Rütteln vorverdichtet wird, auf den dann in einem zweiten Verfüllschritt der Vorsatzbeton mit den gewünschten Oberflächeneigenschaften aufgebracht und im Rüttelpressverfahren (Rütteln unter Auflast) verdichtet wird. Auf den Vorsatzbeton werden insbesondere während des Rüttelpressverfahrens oder kurz danach die photokatalytisch aktiven Teilchen auf den Vorsatzbeton aufgebracht.

Gleichermaßen können z.B. Estriche nach dem Einbringen in ein abgegrenztes Feld bzw. eine abgegrenzte Form und Glätten oberflächlich mit den photokatalytisch aktiven Teilchen versehen werden durch z.B. Aufstreuen, Aufsprühen, Aufstäuben. Außerdem kann dabei nach dem Aufbringen auch ein leichtes vorsichtiges Einreiben der photokatalytisch aktiven Teilchen erfolgen.

Aufbringen der photokatalytisch aktiven Teilchen auf eine Oberfläche eines Frischbauteils meint zum einen die direkte Belegung einer freien Oberfläche eines sich in einer Form oder in einer Schalung befindenden grünen oder jungen Bauteils vor der Erhärtung mit den Teilchen. Für das Aufbringen steht nur ein bestimmtes Zeitfenster der Frischmasse zur Verfügung, wobei das Zeitfenster abhängig ist von der Art des Bindemittels und/oder der Zusammensetzung des Bindemittels bzw. der Bindemittelmischung, z.B. der Betonmischung. In jedem Fall kann das Zeitfenster auf einfache Weise empirisch ermittelt werden. Das Zeitfenster wird verlassen, wenn die Teilchen nicht mehr adsorbiert werden, weil die Erhärtung zu weit fortgeschritten ist und keine ausreichenden Adhäsionskräfte und/oder Kapillarkräfte mehr vorhanden sind.

Im Falle der Anwesenheit von Zement als Bindemittel in frischen bzw. grünen oder jungen Bauteilen erfolgt das Aufbringen - sofern keine betonverzögernden Zusatzmittel eingesetzt werden - z.B. je nach Zementart spätestens 4 Stunden nach dem Anmischen mit Wasser, wenn oberflächig anstehendes Anmachwasser abtrocknet. Wenn Baukalk oder Gips das Bindemittel sind, erfolgt das Aufbringen spätestens vor dem Abtrocknen der Oberfläche.

Beim direkten Aufbringen werden die Teilchen z.B. aufgepudert und/oder ausgestreut und/oder aufgedüst und/oder aufgesprüht.

Für ein indirektes Aufbringen werden die photokatalytisch aktiven Teilchen zunächst auf einem Zwischenträgerelement z.B. der dünnen Folie oder einer Walze angeordnet. Von der Folie, an der die Teilchen leicht haftend angeordnet sind, werden die Teilchen von der die Folie kontaktierenden Oberfläche des Frischbauteils adsorbiert und verbleiben dort.

Am fertigen erhärteten und entformten bzw. entschalten Bauteil kann der Fachmann ohne weiteres durch eine Analyse der Oberfläche des Bauteils erkennen, ob die photokatalytisch aktiven Teilchen im Zeitfenster des frischen Zustandes des Bauteils aufgebracht wurden. Zum Beispiel erkennt man daran, dass die Teilchen in der kristallinen Baustoffoberflächenmatrix fest eingebunden sind und nicht ungebunden auf der Oberfläche liegen.

Bei der Herstellung von Bauteilen nach dem Stand der Technik, bei der die photokatalytisch aktiven Teilchen der Mischung zugemischt werden, befinden sich im frischen oder erhärteten Zustand des Bauteils zwar auch Teilchen an der Oberfläche des Bauteils; diese Teilchen sind aber weniger wirksam, weil ihre Oberfläche mit Fremdstoffen, z.B. Porenlösungsresten, das sind z.B. gelöstes Ca(OH)₂ und Ca₂SO₄, belegt ist. Bei gleicher Bauteiloberflächenmengenbelegung führt dies nachweislich zu einer geringeren Aktivität.

Durch die Erfindung werden ungewöhnlich viele Vorteile angehäuft. Es werden sehr viel geringere Mengen an teuren photokatalytisch aktiven Teilchen bei gleicher photokatalytischer Wirkung benötigt. Die verfügbare Menge der Teilchen an der Oberfläche ist auf einfache Weise vorherbestimmbar durch eine einfache Dosierung. Die Belegung der Oberfläche bezüglich der Menge und/oder der Art der Teilchen und/oder der Körnungen kann z.B. zonal z.B. mit Schablonen erfolgen. Verwendbar sind trockene Pulver. Ein Mischproblem tritt nicht auf wie bei Frisch-Bindemittelmischungen, denen die Teilchen mit erheblichem Aufwand zugemischt und dispergiert werden und bei denen eine homogene Verteilung in der Mischung erforderlich ist. Es lassen sich nach der Erfindung Nanoteilchen ebenso leicht aufbringen wie Mikroteilchen oder Mischungen daraus.

In jedem Fall kann aber die photokatalytische Effektivität der Teilchen erheblich gesteigert werden, wahrscheinlich weil sie an der Oberfläche des Bauteils freier zugänglich sind als bei Bauteilen, die die Teilchen eingemischt enthalten bei gleicher Menge an der Oberfläche der Bauteile.

Ein weiterer wesentlicher Vorteil der Erfindung ist, dass das Bauteil durch den Zusatz der photokatalytisch aktiven Teilchen keine Festigkeitseinbusse erfährt. Bei Bauteilen, denen die photokatalytisch aktiven Teilchen zugemischt worden sind, schwächen diese Teilchen die Festigkeit, weil sie zur Festigkeit keinen Beitrag leisten.

## Patentansprüche

1. Verfahren zur Herstellung eines geformten Bauteils, das eine mineralische Bindemittelmatrix aus erhärtetem Zement und/oder Baukalk oder/und Gips aufweist, wobei in der Matrix Zuschlagstoffe und/oder Zusatzstoffe und/oder Zusatzmittel enthalten sein können und wobei das Bauteil in seiner Verwendbarkeit oder Verwendung eine Licht empfangende Oberfläche bildet, an der sich photokatalytisch wirkende Teilchen befinden, wobei zumindest aus mindestens einem mineralischen Bindemittel und Wasser und gegebenenfalls mindestens einem Zuschlagstoff und/oder mindestens einem Zusatzstoff und/oder mindestens einem Zusatzmittel Frischmasse angemacht und anschließend zur Formgebung des Bauteils in eine Form oder Schalung eingebracht wird und nach dem Formen auf mindestens eine Oberfläche der Frischmasse vor dem Erhärten insbesondere während des Erstarrens des Bindemittels photokatalytisch wirkende Teilchen aufgebracht werden,
**dadurch gekennzeichnet,dass**
die Teilchen vor dem Aufbringen mit mindestens einem mineralischen Bindemittelpulver trocken vermischt werden, die trockene Bindemittel/aktive Teilchen-Mischung auf die Oberfläche aufgebracht wird, wobei vorzugsweise als Bindemittelpulver ein Bindemittel verwendet wird, das auch beim Bauteil verwendet wird und insbesondere ein Zement ist und die Teilchen sich lediglich an der Oberfläche des Bauteils festsitzend befinden, während der übrige Bauteilkörper die Teilchen nicht aufweist.

2. Verfahren nach Anspruch 1,
**dadurch gekennzeichnet, dass**
die Teilchen auf eine freie Oberfläche der Frischmasse in der Form oder auf eine freie Oberfläche der Frischmasse nach der Entformung bzw. Entschalung auf die vorbestimmte Oberfläche aufgebracht werden.

3. Verfahren nach Anspruch 1 und/oder 2,
**dadurch gekennzeichnet,dass**
Teilchen aus TiO₂ und/oder ZnO und/oder mineralmodifiziertem TiO₂ und/oder mineralmodifiziertem ZnO mit Teilchengrößen im Nanobereich zwischen 1 und 100 nm, insbesondere zwischen 20 und 100 nm und/oder im Mikrobereich zwischen 0,1 und 50 µm, vorzugsweise zwischen 0,1 und 1 µm verwendet werden.

4. Verfahren nach einem oder mehreren der Ansprüche 1 bis 3,
**dadurch gekennzeichnet,dass**
die Teilchen in einer Menge aufgebracht werden, die flächenmäßig 0,1 bis 50, insbesondere 2 bis 10 Flächen-% der Oberfläche einnimmt.

5. Verfahren nach einem oder mehreren der Ansprüche 1 bis 4,
**dadurch gekennzeichnet, dass**
die Teilchen und das Bindemittelpulver in Gewichtsmengenverhältnissen von 90/10 bis 20/80 Gew.-% zusammengemischt werden.

6. Verfahren nach einem oder mehreren der Ansprüche 1 bis 5,
**dadurch gekennzeichnet,dass**
sich die Teilchen in eine Oberflächenzone erstrecken, die maximal nur 50 µm tief, insbesondere nur 5 µm tief, ganz besonders nur 2 µm tief ist.

7. Verfahren nach einem oder mehreren der Ansprüche 1 bis 6,
**dadurch gekennzeichnet,dass**
die Teilchen vor oder bei ansteifender oder vor oder bei erstarrender Konsistenz nach dem Anmachen einer Frischmasse für das Bauteil auf die Oberfläche aufgebracht werden.

8. Verfahren nach einem oder mehreren der Ansprüche 1 bis 7,
**dadurch gekennzeichnet, dass**
die Teilchen aus TiO₂ und/oder ZnO und/oder mineralmodifiziertem TiO₂ und/oder mineralmodifiziertem ZnO bestehen.

9. Verfahren nach einem oder mehreren der Ansprüche 1 bis 8,
**dadurch gekennzeichnet,dass**
die Teilchen als Nanoteilchen Korngrößen von 1 bis 100, insbesondere von 20 bis 100 nm aufweisen.

10. Verfahren nach einem oder mehreren der Ansprüche 1 bis 9,
**dadurch gekennzeichnet,dass**
die Teilchen als Mikroteilchen Korngrößen von 0,1 bis 50, insbesondere von 0,1 bis 1 µm aufweisen.

11. Verfahren nach einem oder mehreren der Ansprüche 1 bis 10,
**dadurch gekennzeichnet,dass**
die Teilchen gleichmäßig verteilt oder unregelmäßig oder mustermäßig flächenverteilt auf der Oberfläche angeordnet sind.

12. Verfahren nach einem oder mehreren der Ansprüche 1 bis 11,
**dadurch gekennzeichnet,dass**
Zement gebundene Pflastersteine oder Betonwerksteine in Formen hergestellt werden.

13. Verfahren nach Anspruch 12,
**dadurch gekennzeichnet,dass**
Betonpflastersteine oder Betonfertigteile hergestellt werden, bei denen zunächst ein Kernfrischbeton in die Formen eingefüllt und z.B. vorverdichtet wird, auf den dann in einem zweiten Verfüllschritt der Vorsatzfrischbeton mit den gewünschten Oberflächeneigenschaften aufgebracht und z.B. im Rüttelpressverfahren verdichtet wird, wobei auf die in der Form freie Oberfläche des Vorsatzfrischbetons, insbesondere vor dem Rüttelpressverfahren oder kurz danach die Teilchen aufgebracht werden.

## Claims

1. A process for the production of a shaped structural component comprising a mineral binder matrix of hardened cement and/or building lime and/or gypsum, wherein aggregates and/or additions and/or admixtures may be contained in the matrix and wherein the structural component forms, in its potential use or use, a light-receiving surface on which photocatalytically active particles are situated, wherein fresh material is mixed at least from at least one mineral binder and water and optionally at least one aggregate and/or at least one addition and/or at least one admixture and then introduced into a mould or form boards in order to form the structural component and, after the shaping, photocatalytically active particles are applied on to at least one surface of the fresh material before hardening, in particular during the setting of the binder,
**characterised in that**
the particles are dry-mixed with at least one mineral binder powder before being applied, the dry binder/active particle mixture is applied on to the surface, wherein a binder which is also used in the structural component and which is in particular a cement is preferably used as binder powder and the particles are only situated fixed on the surface of the structural component while the rest of the body of the structural component does not comprise the particles.

2. The process according to claim 1,
**characterised in that**
the particles are applied on to the predetermined surface on a free surface of the fresh material in the mould or on a free surface of the fresh material after removing from the mould or form boards.

3. The process according to claim 1 and/or 2,
**characterised in that**
particles of TiO₂ and/or ZnO and/or mineral-modified TiO₂ and/or mineral-modified ZnO with particle sizes in the nano range between 1 and 100 nm, in particular between 20 and 100 nm, and/or in the micro range between 0.1 and 50 µm, preferably between 0.1 and 1 µm, are used.

4. The process according to one or more of claims 1 to 3,
**characterised in that**
the particles are applied in a quantity that takes up 0.1 to 50, in particular 2 to 10, area % of the surface in terms of area.

5. The process according to one or more of claims 1 to 4,
**characterised in that**
the particles and the binder powder are mixed together in quantitative weight ratios of 90/10 to 20/80 wt.%.

6. The process according to one or more of claims 1 to 5,
**characterised in that**
the particles extend into a surface region that is a maximum of only 50 µm deep, in particular only 5 µm deep and most particularly only 2 µm deep.

7. The process according to one or more of claims 1 to 6,
**characterised in that**
the particles are applied on to the surface before or during a stiffening consistency or before or during a setting consistency after mixing a fresh material for the structural component.

8. The process according to one or more of claims 1 to 7,
**characterised in that**
the particles consist of TiO₂ and/or ZnO and/or mineral-modified TiO₂ and/or mineral-modified ZnO.

9. The process according to one or more of claims 1 to 8,
**characterised in that**
the particles as nanoparticles have particle sizes of 1 to 100, and in particular of 20 to 100 nm.

10. The process according to one or more of claims 1 to 9,
**characterised in that**
the particles as microparticles have particle sizes of 0.1 to 50, and in particular of 0.1 to 1 µm.

11. The process according to one or more of claims 1 to 10,
**characterised in that**
the particles are disposed on the surface uniformly distributed or distributed over the area irregularly or in a pattern.

12. The process according to one or more of claims 1 to 11,
**characterised in that**
cement bound pavers or manufactured stone masonry units are produced in moulds.

13. The process according to claim 12,
**characterised in that**
concrete pavers or pre-cast concrete products are produced, in which a fresh core concrete is first placed into the moulds and e.g. pre-compacted and then, in a second filling process, the fresh facing concrete having the desired surface properties is applied thereon and e.g. compacted in a vibrating press process, the particles being applied on to the free surface of the fresh facing concrete in the mould, in particular before or shortly after the vibrating press process.

## Revendications

1. Procédé de fabrication d'une pièce moulée qui comprend une matrice de liant minérale en ciment durci et/ou en chaux de construction et/ou en plâtre, dans lequel des adjuvants et/ou des additifs et/ou des produits d'addition peuvent être contenus dans la matrice, et dans lequel la pièce forme lors de son utilisation une surface capturant la lumière, sur laquelle se trouvent des particules à action photocatalytique, au moins une masse fraîche constituée d'au moins un liant minéral et de l'eau et, le cas échéant, d'au moins un adjuvant et/ou au moins un additif et/ou au moins un produit d'addition étant gâchée puis placée dans un moule ou un coffrage pour le façonnage de la pièce et, après le moulage, les particules à action photocatalytique étant appliquées sur au moins une surface de la masse fraîche avant le durcissement, plus particulièrement pendant la prise du liant,
**caractérisé en ce que** les particules sont mélangées à sec avec au moins un liant en poudre, **en ce que** le mélange sec de liant et de particules actives est appliqué sur la surface, le liant en poudre utilisé étant de préférence celui qui est utilisé également pour la pièce et plus particulièrement un ciment et les particules étant fixées seulement à la surface de la pièce, tandis que le corps de la pièce ne comprend pas de particules.

2. Procédé selon la revendication 1,
**caractérisé en ce que** les particules sont appliquées sur une surface libre de la masse fraîche dans le moule ou sur une surface libre de la masse fraîche après le démoulage ou le décoffrage sur la surface prédéterminée.

3. Procédé selon la revendication 1 et/ou 2,
**caractérisé en ce que** des particules de TiO₂ et/ou ZnO et/ou TiO₂ minéral modifié et/ou ZnO minéral modifié avec des tailles de particules dans le domaine nanométrique comprises entre 1 et 100 nm, plus particulièrement entre 20 et 100 nm et/ou dans le domaine micrométrique comprises entre 0,1 et 50 µm, de préférence entre 0,1 et 1 µm sont utilisées.

4. Procédé selon une ou plusieurs des revendications 1 à 3,
**caractérisé en ce que** les particules sont appliquées dans une quantité, qui recouvre 0,1 à 50 % de la surface, plus particulièrement 2 à 10 % de la surface.

5. Procédé selon une ou plusieurs des revendications 1 à 4,
**caractérisé en ce que** les particules et le liant en poudre sont mélangés avec des proportions en poids allant de 90/10 à 20/80 %.

6. Procédé selon une ou plusieurs des revendications 1 à 5,
**caractérisé en ce que** les particules s'étendent dans une zone de la surface qui présente une profondeur de seulement 50 µm maximum, plus particulièrement de seulement 5 µm, et encore plus particulièrement de seulement 2 µm.

7. Procédé selon une ou plusieurs des revendications 1 à 6,
**caractérisé en ce que** les particules sont appliquées sur la surface avant ou pendant le durcissement ou la prise après le gâchage d'une masse fraîche pour la pièce.

8. Procédé selon une ou plusieurs des revendications 1 à 7,
**caractérisé en ce que** les particules sont constituées de TiO₂ et/ou ZnO et/ou TiO₂ minéral modifié et/ou ZnO minéral modifié.

9. Procédé selon une ou plusieurs des revendications 1 à 8,
**caractérisé en ce que** les particules présentent, en tant que particules nanométriques, des tailles de grains allant de 1 à 100, plus particulièrement de 20 à 100 nm.

10. Procédé selon une ou plusieurs des revendications 1 à 9,
**caractérisé en ce que** les particules présentent, en tant que particules micrométriques, des tailles de grains allant de 0,1 à 50, plus particulièrement de 0,1 à 1 µm.

11. Procédé selon une ou plusieurs des revendications 1 à 10,
**caractérisé en ce que** les particules sont réparties régulièrement ou irrégulièrement ou selon un motif sur la surface.

12. Procédé selon une ou plusieurs des revendications 1 à 11,
**caractérisé en ce que** des pavés à base de ciment ou des pierres reconstituées en béton sont fabriqués dans des moules.

13. Procédé selon la revendication 12,
**caractérisé en ce que** des pavés en béton ou des pièces finies en béton sont fabriqués, pour lesquels un noyau de béton frais est d'abord introduit dans les moules et, par exemple, pré-compressé, et sur lequel, dans une deuxième étape de remplissage, le béton frais de parement avec les propriétés de surface souhaitées est appliqué et, par exemple, compressé dans un procédé de compression à vibrations, les particules étant ensuite appliquées sur la surface libre du béton frais de parement dans le moule, plus particulièrement avant le procédé de compression à vibrations.
